# EUROPÄISCHE PATENTSCHRIFT

(11) **EP 4 261 081 B1**
(45) Veröffentlichungstag und Bekanntmachung des Hinweises auf die Patenterteilung: **16.10.2024**
(21) Anmeldenummer: 23166707.2
(22) Anmeldetag: 05.04.2023
(51) Int. Cl.: B60Q 1/30, B60P 1/44

(54) **HUBLADEBÜHNE FÜR FAHRZEUGE**
LOADING TAILGATE FOR VEHICLES
HAYON ÉLÉVATEUR POUR VÉHICULES

(30) Priorität: 13.04.2022 DE 102022108994
(43) Veröffentlichungstag der Anmeldung: 18.10.2023
(73) Patentinhaber: Palfinger Tail Lifts GmbH, 27777 Ganderkesee (DE)
(72) Erfinder: Wöst, Hendrik, 26135 Oldenburg (DE); Middendorf, Daniel, 49377 Vechta (DE)
(74) Vertreter: Meissner Bolte Partnerschaft mbB

(56) Entgegenhaltungen:
- EP-A1- 0 017 620
- DE-A1- 102020 109 849
- JP-A- 2012 006 455

## Beschreibung

Die Erfindung betrifft eine Hubladebühne für ein Fahrzeug gemäß dem Oberbegriff des Anspruchs 1.

Zum Erleichtern des Be- und Entladens von Fahrzeugen, insbesondere Lkws und/oder deren Anhänger, dienen Hubladebühnen. Diese verfügen über jeweils eine von einem Hubwerk heb-, senk- und schwenkbare Ladeplattform. Die Ladeplattform ermöglicht es, Ladungsgegenstände von einem höheren Niveau, beispielsweise eines Laderaums des Fahrzeugs oder gegebenenfalls auch darüber, auf den Boden abzusenken und umgekehrt anzuheben.

Aus der JP 2012 006455 A ist eine Ladeplattform von Hubladebühnen mit einer Abrollsicherung bekannt. Diese Abrollsicherung ist in Fahrtrichtung des Fahrzeugs gesehen von einer quergerichteten Hinterkante der Ladeplattform beabstandet. Die Abrollsicherung soll insbesondere das Herunterrollen von fahrbaren Untergestellen, zum Beispiel Rollcontainer, von der freien quergerichteten Hinterkante der Ladeplattform verhindern. Zu diesem Zweck ist die Abrollsicherung in eine Gebrauchsstellung hochschwenkbar. In dieser Gebrauchsstellung kann die Abrollsicherung insbesondere bei leerer Ladeplattform zur Gefährdung von Personen auf derselben beitragen, indem sie beispielsweise über die hochgeklappte Anlaufklappe der Abrollsicherung stolpern. Um das zu vermeiden, ist die bekannte Abrollsicherung mit einem reflektierten Aufkleber versehen. Bei Dunkelheit ist dieser jedoch nur sichtbar, wenn er von einer fremden Lichtquelle angestrahlt wird.

Aus der EP 0 017 620 A1 ist eine Hubladebühne mit einer Ladeplattform bekannt, die mit Rückstrahlern oder Warnblinkern versehen ist. Dazu sind in Ausnehmungen der Ladeplattform schwenkbare Pendelkörper angeordnet. Die Pendelkörper sind leicht außermittig um horizontale, quergerichtete Drehachsen in der Ausnehmung gelagert. Dadurch bewegen sich die Rückstrahler bzw. Warnblinker bei verschwenkter Ladeplattform selbsttätig aus den Ausnehmungen heraus. So können die Rückstrahler oder Warnblinker hinter der Ladeplattform stehenden Personen anzeigen, dass die Ladeplattform heruntergeschwenkt ist, wobei die freie Hinterkante derselben eine Gefahr darstellt. Mit Anlaufklappen aufweisenden Abrollsicherungen befasst sich die EP 0 017 620 A1 nicht.

Ausgehend vom Vorstehenden liegt der Erfindung die Aufgabe zugrunde, eine Hubladebühne für Fahrzeuge zu schaffen, deren mindestens eine Abrollsicherung in der Dämmerung und bei Dunkelheit in ihrer hochgeklappten Gebrauchsstellung zuverlässig beleuchtet.

Eine Hubladebühne zur Lösung der genannten Aufgabe weist die Merkmale des Anspruchs 1 auf. Bei dieser Hubladebühne ist es vorgesehen, die jeweilige Abrollsicherung durch wenigstens eine ihr zugeordnete Leuchteinrichtung zu beleuchten, insbesondere beleuchtbar auszugestalten. Durch eine solche Leuchteinrichtung sind Lichtstrahlen, Lichtbündel oder Lichtkegel erzeugbar. Die von der jeweiligen Leuchteinrichtung erzeugten Lichtstrahlen bzw. die Längsmittelachsen der Lichtbündel oder Lichtkegel verlaufen vorzugsweise senkrecht und/oder leicht geneigt zu einer Nutzfläche der Ladeplattform. Dadurch ist das von der jeweiligen Leuchteinrichtung ausgesandte Licht nach oben und/oder zur jeweiligen Person auf der Ladeplattform gerichtet. So sind die Gefahren darstellenden Abrollsicherungen beleuchtet und/oder erleuchtet. Das Licht zeigt daher der jeweiligen Person auf der Ladeplattform nicht nur an, wo sich die Abrollsicherung befindet; das Licht gibt der jeweiligen Person auch einen Hinweis und/oder eine Warnfunktion. Das führt vor allem bei schlechten Sichtverhältnissen, beispielsweise in der Dunkelheit, dazu, dass eine jeweilige auf der Ladeplattform tätige Person durch die betreffende, hochgeklappte Abrollsicherung nicht gefährdet wird.

Die jeweilige Abrollsicherung ist so ausgebildet, dass sie mindestens eine Anlaufklappe aufweist. Die jeweilige Anlaufklappe ist von einer in der Ebene der Nutzfläche der Ladeplattform liegenden Ruhestellung in eine gegenüber der Nutzfläche mindestens teilweise vorstehende Gebrauchsstellung verschwenkbar. Dabei ist die wenigstens eine Leuchteinrichtung der jeweiligen Abrollsicherung im Bereich ihrer Anlaufklappe zugeordnet. Es wird dadurch die Anlaufklappe selbst und/oder der Bereich, worin sie sich befinden, von der Leuchteinrichtung beleuchtet.

Weiterhin ist es vorgesehen, die jeder Abrollsicherung zugeordnete Leuchteinrichtung in der Ladeplattform unter der jeweiligen, sich in der Ruhestellung befindenden heruntergeklappten Anlaufklappe der Abrollsicherung anzuordnen. In der Ruhestellung der Anlaufkappe ist die jeweilige Leuchteinrichtung dann von der heruntergeklappten Anlaufklappe überdeckt und/oder abgedeckt.

Bevorzugt befindet sich die Leuchteinrichtung oder die jeweilige Leuchteinrichtung unter einem Durchbruch für die jeweilige Anlaufklappe in der Nutzfläche der Ladeplattform, insbesondere eine die Nutzfläche bildende Deckwandung der jeweiligen Ladeplattform. Dadurch ist die der jeweiligen Abrollsicherung und/oder ihrer Anlaufklappe zugeordnete Leuchteinrichtung geschützt im Inneren der Ladeplattform untergebracht, wobei die jeweilige heruntergeklappte Anlaufklappe die jeweils darunter befindlichen Leuchteinrichtung abdeckt.

Es kann vorgesehen sein, dass die Leuchteinrichtung nur dann aktiviert ist, also Licht erzeugt und/oder abstrahlt, wenn die jeweilige Anlaufklappe in ihre Gebrauchsstellung hochgeschwenkt ist. Das ist ausreichend, weil die jeweilige Abrollsicherung, insbesondere ihre Anlaufklappen, nur in der hochgeklappten Gebrauchsstellung gegenüber der Nutzfläche der Ladeplattform hochsteht und dadurch eine Gefahr für die jeweilige Person auf der Ladeplattform darstellen kann. In der heruntergeklappten Ruhestellung schließt die Ablaufsicherung, insbesondere ihre jeweilige Anlaufklappe, bündig mit der Nutzfläche der Ladeplattform ab, so dass sie keine aktive Gefahr darstellt.

Es ist auch denkbar, die Abrollsicherung, insbesondere die Umrisse der jeweiligen Anlaufklappe, in der Ruhestellung derselben durch ein auch dann aktives Leuchtmittel zumindest andeutungsweise zu erhellen. Dadurch kann die sich jeweils auf der Ladeplattform befindliche Personen vor allem im Dunkeln erkennen, wo sich die jeweilige Abrollsicherung befindet und eventuelles Ladegut auf der Ladeplattform so positionieren, dass die Abrollsicherung bei Bedarf in ihre Gebrauchsstellung hochgeklappt werden kann.

Bei einer bevorzugten Weiterbildungsmöglichkeit der Hubladebühne ist es vorgesehen, die wenigstens eine Leuchteinrichtung im Inneren der Ladeplattform anzuordnen. Bevorzugt befindet sich die wenigstens eine Leuchteinrichtung unterhalb der Nutzfläche im Inneren der Ladeplattform. Dadurch ist die jeweilige Leuchteinrichtung geschützt in der Ladeplattform und bevorzugt unterhalb der Nutzfläche und/oder der jeweiligen Anlaufklappe angeordnet. Die mindestens eine Leuchteinrichtung kann dadurch von Personen und Ladung auf der Nutzfläche der Ladeplattform nicht beschädigt werden.

Des Weiteren kann es vorgesehen sein, dass der Durchbruch für die jeweilige Anlaufklappe der Deckwandung der Ladeplattform bei in die Gebrauchsstellung hochgeklappter Anlaufklappe mindestens teilweise freigegeben ist zum Austritt des von der Leuchteinrichtung unter dem Durchbruch stammenden Lichts. Auf diese Weise ist Personen auf der Nutzfläche der Ladeplattform die Gebrauchsstellung der jeweiligen Abrollsicherung optisch anzeigbar. Durch das aus dem jeweiligen Durchbruch bei hochgeklappter Anlaufklappe austretende Licht, insbesondere austretende Lichtstrahlen, wird angezeigt, dass sich die jeweilige Abrollsicherung in ihrer hochgeschwenkten Gebrauchsstellung befindet, in der die mindestens eine hochgeklappte Anlaufklappe eine Gefahr, vor allem Stolpergefahr, für Personen auf der Nutzfläche der Ladeplattform bildet.

Bei einer vorteilhaften Weiterbildungsmöglichkeit der Hubladebühne ist es vorgesehen, in der Ladeplattform unterhalb der jeweiligen sich in ihrer heruntergeklappten Ruhestellung befindenden Anlaufklappe eine Abdeckung für die Leuchteinrichtung in der Ladeplattform vorzusehen. Dabei handelt es sich bevorzugt um mindestens eine teilweise lichtdurchlässige Abdeckung. Dadurch sind auch bei geöffneten Anlaufklappen die diesen zugeordneten Leuchteinrichtungen, insbesondere Leuchtmittel, in der Ladeplattform geschützt. Die jeweilige Abdeckung ist vorteilhafterweise lösbar mit der Ladeplattform verbunden. Dadurch lässt sich das jeweilige Leuchtmittel ungehindert vor der Abdeckung montieren und im Falle eines Defekts auch austauchen.

Bevorzugt ist es vorgesehen, die wenigstens eine Leuchteinrichtung in oder unter der jeweiligen Abdeckung anzuordnen und/oder mit der wenigstens einen Leuchteinrichtung zu verbinden. Dadurch werden jede Abdeckung und die ihr zugeordnete Leuchteinrichtung eine Einheit, die als Ganzes montierbar und demontierbar ist, wobei die Abdeckung gleichzeitig als ein Schutz für die jeweilige Leuchteinrichtung, insbesondere ihre Leuchtmittel, dient.

Gemäß einer bevorzugten Ausgestaltung der Hubladebühne weist die jeweilige Leuchteinrichtung zur Beleuchtung der Plattformspitze eine Reihe vorzugsweise quer zur Fahrtrichtung verlaufender, vorzugsweise gleicher, voneinander beabstandeter Leuchtmittel auf. Mehrere Leuchtmittel der jeweiligen Leuchteinrichtung können miteinander verkettet sein, indem sie beispielsweise als Leuchtstreifen ausgebildet sind. Die Verkettung der Leuchtmittel dient dann gleichzeitig zur elektrischen Verdrahtung derselben. Die Leuchtmittel können als Leuchtdioden (LED's) ausgebildet sein, aber auch als Glühbirnen. Auch ist es denkbar, die jeweilige Leuchteinrichtung mit mindestens einem Lichtleiter zu versehen, der im Bereich jedes Durchbruchs in der Deckfläche der Ladeplattform wenigstens ein Lichtauskopplungsmittel aufweist. Denkbar ist es auch, den Durchbrüchen eine Leuchteinrichtung zuzuordnen, die eine beleuchtete Fläche aufweist. Diese kann beispielsweise von einer OLED-Folie gebildet sein.

Bevorzugt ist es vorgesehen, dass die Leuchteinrichtung einen lichtdurchlässigen Lichtleitkörper aufweist, worin Leuchtmittel oder Lichtleiter eingebettet sind oder der Lichtleitkörper als Lichtleiter dient. Auch solchermaßen ausgebildete Leuchteinrichtungen können aus Leuchtstreifen oder Leuchtleisten gebildet werden, zur gleichmäßigen Beleuchtung der mindestens einen Ausnehmung für die oder jede längliche Anlaufklappe der Abrollsicherung.

Bei einer vorteilhaften Ausgestaltung der Hubladebühne sind die Leuchteinrichtungen solchermaßen in der Ladeplattform angeordnet, dass von den Leuchteinrichtungen, insbesondere ihren Leuchtmitteln, abgestrahltes Licht mindestens größtenteils nach oben gerichtet aus den Durchbrüchen in der Deckwandung der Ladeplattform austritt und/oder nach oben gerichtet hindurchtritt. Dadurch ist die oder jede Abrollsicherung deutlich wahrnehmbar und außerdem kann auch die Umgebung erhellt werden, wodurch sowohl in der Dämmerung als auch bei Dunkelheit ein sicheres Arbeiten von Personen auf der Ladeplattform gewährleistet ist.

Bevorzugte Ausführungsbeispiele der Erfindung werden nachfolgend anhand der Zeichnung näher erläutert. In dieser zeigen:
- Fig. 1: eine perspektivische Darstellung eines hinteren Teils eines Fahrzeugs mit einer daran montierten Hubladebühne bei heruntergeschwenkter (aufgeklappter) und abgesenkter Ladeplattform,
- Fig. 2: eine Draufsicht auf einen hinteren Teil der Ladeplattform im Bereich zweier Abrollsicherungen,
- Fig. 3: einen Querschnitt durch den in der Fig. 2 dargestellten hinteren Teil der Ladeplattform durch eine Abrollsicherung, wobei sich die gezeigte Abrollsicherung in ihrer Ruhestellung befindet,
- Fig. 4: eine vergrößerte Einzelheit aus der Fig. 3 im Bereich der Abrollsicherung,
- Fig. 5: einen Querschnitt analog zur Fig. 4 bei sich in der Gebrauchsstellung befindlicher Abrollsicherung,
- Fig. 6: ein alternatives Ausführungsbeispiel der Beleuchtung der Abrollsicherung in einer Darstellung analog zur Fig. 5, und
- Fig. 7: ein weiteres alternatives Ausführungsbeispiel der Beleuchtung der Abrollsicherung in einer Darstellung analog zu den Fig. 5 und 6.

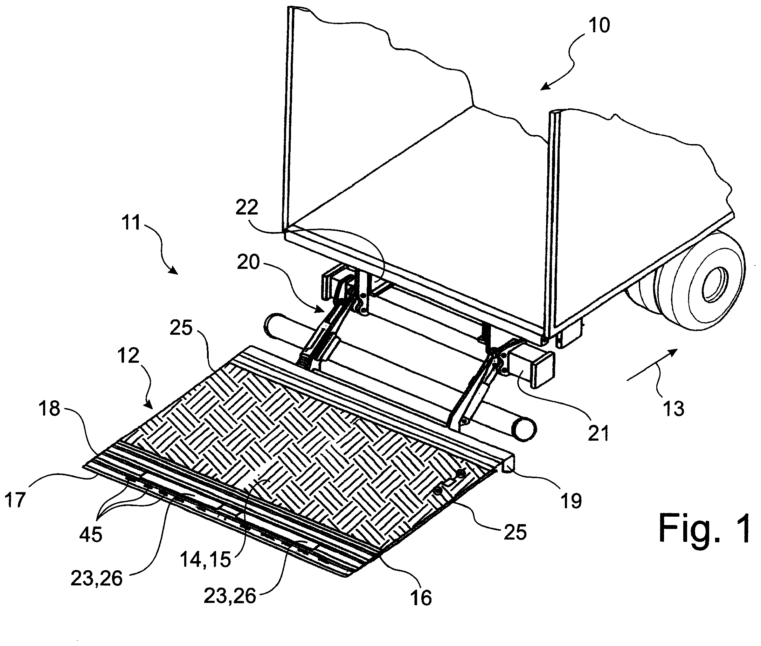

Die Fig. 1 zeigt einen hinteren Teil eines Fahrzeugs, und zwar eine Rückseite seines Fahrzeugaufbaus 10. Beim Fahrzeug kann es sich um einen Lkw, Klein-Lkw, einen Anhänger oder einen Sattelauflieger handeln.

An der Rückseite des Fahrzeugaufbaus 10 ist eine Hubladebühne 11 montiert. Die Hubladebühne 11 verfügt über eine flächige Ladeplattform 12 mit etwa rechteckiger Grundfläche. Üblicherweise entspricht die Grundfläche der Breite des Fahrzeugs, wobei die Länge in Fahrtrichtung 13 des Fahrzeugs gesehen etwas geringer ist als die Breite. Es sind aber auch Sonderbauformen von Hubladebühnen 11 denkbar, bei denen die Ladeplattform 12 schmaler ist als die Breite des Fahrzeugaufbaus 10. In solchen Fällen kann die Breite der Ladeplattform 12 geringer sein als ihre Länge. Es ist auch denkbar, dass die Ladeplattform 12 eine quadratische Grundfläche aufweist.

Von der Seite her gesehen verfügt die Ladeplattform 12 über einen keilförmigen Querschnitt. Dadurch verlaufen eine ebene Nutzfläche 14 der Hubladebühne 11 bildende Deckwandung 15 und eine darunterliegende Bodenwandung 16 nicht parallel zueinander, sondern derart, dass sie gegen die Fahrtrichtung 13 zur Rückseite der Ladeplattform 12 hin konvergieren und an einer hinteren Querkante 17 bzw. einer quergerichteten Hinterkante der Ladeplattform 12 zusammentreffen. Dadurch bildet die hintere Querkante 17 der Ladeplattform 12 eine sogenannte Plattformspitze 18 der Ladeplattform 12. Die Plattformspitze 18 entspricht somit der hinteren Querkante 17. Auch wird vielfach die hintere Querkante 17 zusammen mit einem sich daran anschließenden schmalen Randstreifen der Ladeplattform 12 bzw. ihrer Nutzfläche 14 als Plattformspitze 18 bezeichnet.

Einer der hinteren Querkante 17 gegenüberliegende vordere Querkante, in deren Bereich die Deckwandung 15 und die Bodenwandung 16 am weitesten voneinander beabstandet sind, ist die Ladeplattform 12 mit einem Plattformträger 19 versehen oder weist den Plattformträger 19 auf.

Des Weiteren verfügt die Hubladebühne 11 über ein Hubwerk 20 zum Heben, Senken und Verschwenken der Ladeplattform 12. Das Hubwerk ist um eine Schwenkachse verschwenkbar mit dem Plattformträger 19 der Ladeplattform 12 oder an derselben verbunden. Außerdem ist das Hubwerk 20 im hinteren Bereich des Fahrzeugs montiert, und zwar vorzugsweise am Chassis desselben. Im Ausführungsbeispiel der Fig. 1 ist das Hubwerk 20 mit einem quer zur Fahrtrichtung 13 verlaufend am Chassis des Fahrzeugs angeordneten Tragrohr 21 verbunden. Alternativ kann das Hubwerk 20 auch direkt an Längsträgern 22 des Chassis des Fahrzeugs montiert sein.

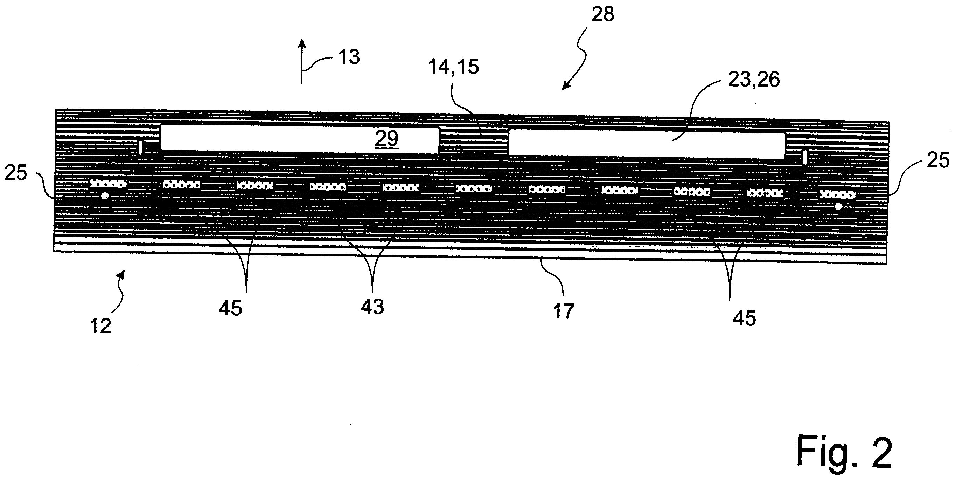

Die gezeigte Ladeplattform 12 verfügt über Abrollsicherungen. Diese dienen zur Verhinderung des Herunterrutschens von Ladegut oder Herunterrollen von Ladegut aufnehmenden Rollbehältern von der Ladeplattform 12. Im gezeigten Ausführungsbeispiel (Fig. 1 und 2) verfügt die Ladeplattform 12 über zwei mit geringem Abstand nebeneinanderliegende Abrollsicherungen 23. Die Erfindung ist aber nicht auf zwei Abrollsicherungen 23 beschränkt. Sie eignet sich auch für Hubladebühnen, deren Ladeplattformen 12 nur eine Abrollsicherung 23 oder mehr als zwei Abrollsicherungen 23 aufweisen.

Die in den Fig. 1 und 2 gezeigten streifenartigen Abrollsicherungen 23 sind nebeneinanderliegend dem hinteren Bereich der Ladeplattform 12 zugeordnet, und zwar so, dass die beiden nebeneinanderliegenden Abrollsicherungen 23 von der hinteren Querkante 17 und/oder der Plattformspitze 18 entfernt sind. Die beiden Abrollsicherungen 23 sind demzufolge gegenüber der hinteren Querkante 17 in Richtung zum Plattformträger 19 der Ladeplattform 12 beabstandet. Dadurch befindet sich hinter den beiden nebeneinanderangeordneten Abrollsicherungen 23 ein schmaler Endbereich 24 der Nutzfläche 14. Die beiden schmalen Abrollsicherungen 23 liegen bei den in den Fig. 1 und 2 dargestellten Ausführungsbeispielen der Hubladebühne 11 mit geringfügigem Abstand so nebeneinander, dass ihre beiden Längsmittelachsen auf einer Linie liegen, die mit parallelem Abstand zur hinteren Querkante 17 und/oder der Plattformspitze 18 der Ladeplattform 12 verläuft. Sie können alternativ aber auch zusammenliegen. Die Abrollsicherungen 23 verfügen über gleiche Abmessungen, insbesondere gleiche Längen. Außerdem weisen die äußeren Ränder der Abrollsicherungen 23 jeweils einen gleichen Abstand zu Längsrändern 25 der Ladeplattform 12 auf.

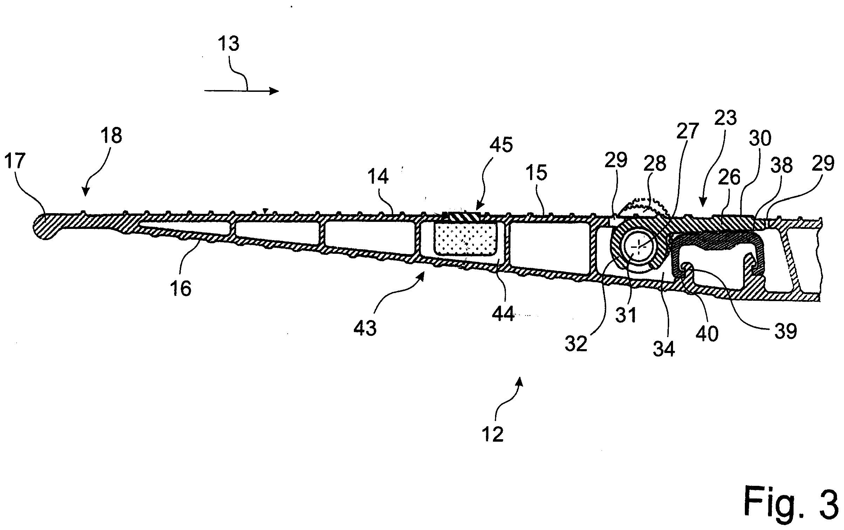

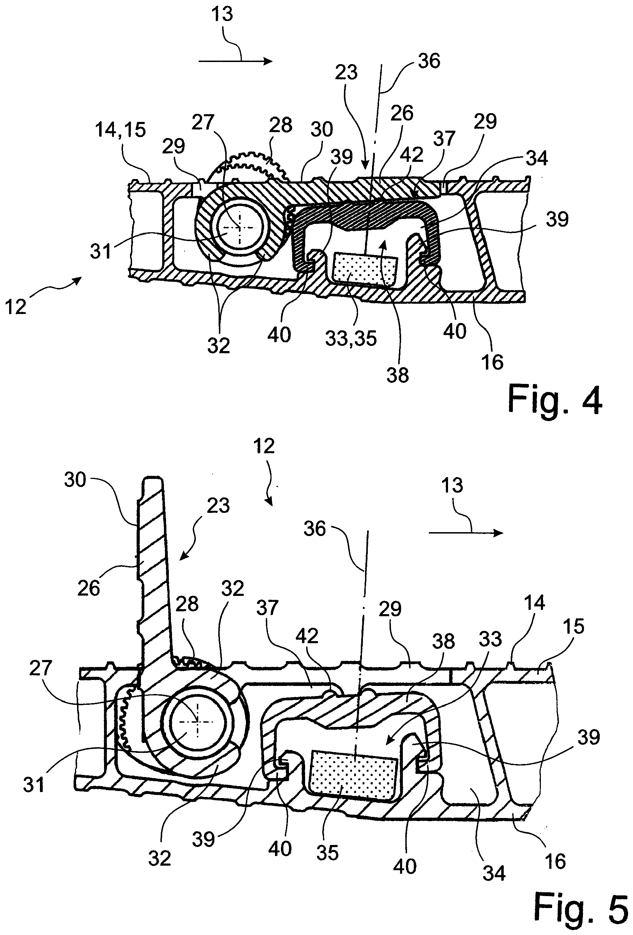

Jede der im gezeigten Ausführungsbeispiel gleich ausgebildeten Abrollsicherungen 23 verfügt über eine Anlaufklappe 26. Die jeweilige Anlaufklappe 26 ist um eine horizontale, quer zur Fahrtrichtung 13 verlaufende Schwenkachse 27 verschwenkbar. Die jeweilige Schwenkachse 27 ist bei der gezeigten Ladeplattform 12 einem zur Plattformspitze 18 weisenden hinteren Querrand der jeweiligen Anlaufklappe 26 zugeordnet. Um die Schwenkachse 27 kann die jeweilige Anlaufklappe 26 von einer in den Fig. 3 und 4 gezeigten heruntergeklappten Ruhestellung in eine in den Fig. 5 bis 7 gezeigte aufgeklappte Gebrauchsstellung überführt werden. Das Verschwenken jeder einzelnen Anlaufklappe 26 von der Ruhestellung in die Gebrauchsstellung und umgekehrt erfolgt bei der hier gezeigten Hubladebühne 11 manuell durch gegenüber der Nutzfläche 14 geringfügig vorstehende Räder 28 oder Nocken. Jede Anlaufklappe 26 ist durch ein ihr zugeordnetes Rad 28 oder einen Nocken individuell verschwenkbar. Es ist aber auch denkbar, die beiden nebeneinanderliegenden Anlaufklappen 26 gemeinsam durch ein Rad 28 oder einen Nocken zu verschwenken. Dann bilden die beiden Anlaufklappen 26 zusammen eine Abrollsicherung 23. Alternativ ist es denkbar, die Anlaufklappen 26 durch einen entsprechenden Aktuator, beispielsweise einen Druckmittelzylinder oder einen elektrischen Drehantrieb, von der Ruhestellung in die Gebrauchsstellung und umgekehrt zu verschwenken.

Jeder Anlaufklappe 26 ist ein zu ihren Abmessungen korrespondierender länglicher Ausschnitt 29 in der Deckwandung 15 der Ladeplattform 12 zugeordnet. Der Ausschnitt 29 ist geringfügig größer als die Fläche der Anlaufklappe 26, so dass die Anlaufklappe 26 in der Ruhestellung zwängungsfrei im Ausschnitt 29 unterbringbar ist, und zwar vorzugsweise so, dass in der Ruhestellung eine Oberseite 30 der Anlaufklappe 26 bündig mit der Nutzfläche 14 der Ladeplattform 12 abschließt. Dann liegt die Anlaufklappe 26 in ihrer Ruhestellung im ihr zugeordneten Ausschnitt 29 und verschließt diesen dadurch. In der Gebrauchsstellung hingegen gibt die hochgeschwenkte Anlaufklappe 26 den Ausschnitt 29 in der Deckwandung 15 der Ladeplattform 12 größtenteils frei und ragt größtenteils gegenüber der Nutzfläche 14 nach oben vor.

Die jeweilige schwenkbare Anlaufklappe 26 der betreffenden Abrollsicherung 23 ist schwenkbar mit der Ladeplattform 12 verbunden durch eine im Inneren der hohl bzw. hohlkastenartig ausgebildeten Ladeplattform 12 befestigte Stange 31, die quer zur Fahrtrichtung sich mindestens teilweise durch die Ladeplattform 12 erstreckt. Die Längsmittelachse 36 dieser Stange 31 bildet die Schwenkachse 27 der jeweiligen Anlaufklappe 26. Es ist denkbar, bei im gezeigten Ausführungsbeispiel auf einer gemeinsamen Achse liegenden Anlaufklappen 26 der benachbarten Abrollsicherungen 23 die Stange 31 durchgehend über die Bereiche beider Anlaufklappen 26 hinweg erstrecken zu lassen. Dann sind beide Abrollsicherungen 23, insbesondere ihre Anlaufklappen 26, mit einer einzigen gemeinsamen Stange 31 um die Schwenkachse 27 verschwenkbar mit der Ladeplattform 12 verbunden. Die jeweilige Stange 31 kann durch das jeweilige Rad 28 oder den Kipphebel, aber auch einen Aktuator-Antrieb, verdreht werden zum Hoch- und Herunterschwenken der jeweiligen Anlaufklappe 26 oder gegebenenfalls auch aller nebeneinanderliegender Anlaufklappen 26. Jede Anlaufklappe 26 weist an ihrem zur hinteren Querkante 17 der Ladeplattform 12 bzw. der Plattformspitze 18 weisenden Ende eine unter ihrer Oberseite 30 angeordnete Klaue 32 auf, die die Stange 31 teilweise oder gegebenenfalls auch vollständig umgibt und vorzugsweise unverdrehbar mit der Stange 31 verbunden ist. Die Klaue 32 und die ihr zugeordnete Stange 31, womit die Klaue 32 verbunden ist, sind so ausgebildet und im Inneren der Ladeplattform 12 positioniert, dass die Oberseite 30 der jeweiligen Anlaufklappe 26 in ihrer heruntergeklappten Ruhestellung etwa bündig mit der Nutzfläche 14 der Deckwandung 15 der Ladeplattform 12 abschließt.

Erfindungsgemäß ist jeder Abrollsicherung 23 eine Leuchteinrichtung 33 zugeordnet. Die jeweilige Leuchteinrichtung 33 befindet sich ebenso wie die heruntergeschwenkte Anlaufklappe 26 der jeweiligen Abrollsicherung 23 im Inneren der hohl oder hohlkastenartig ausgebildeten Ladeplattform 12, nämlich einer gemeinsamen quer zur Fahrtrichtung 13 verlaufenden Hohlkammer 34. Dabei liegt die jeweilige Leuchteinrichtung 33 in der Ruhestellung der ihr zugeordneten Anlaufklappe 26 von derselben abgedeckt unter der Anlaufklappe 26.

Die Leuchteinrichtung 33 kann auf verschiedene Weisen ausgebildet sein. Im gezeigten Ausführungsbeispiel ist die Leuchteinrichtung 33 nach Art eines Leuchtstreifens ausgebildet, der auch in Längsrichtung der streifenartigen Anlaufklappe 26 (quer zur Fahrtrichtung 13) verläuft. Die Länge des Leuchtstreifens entspricht etwa der Länge der jeweiligen Anlaufklappe 26. Der Leuchtstreifen verfügt über einen mindestens teilweise lichtdurchlässigen Lichtleitkörper 35, worin Leuchtmittel eingebettet, insbesondere eingegossen sind. Bevorzugt ist im Lichtleitkörper 35 mindestens eine Reihe von Leuchtmitteln in gleichmäßigem Abstand zueinander angeordnet. Die Leuchtmittel sind bevorzugt untereinander gleich ausgebildet, so dass sie über die gesamte Länge des Lichtleitkörpers 35 der Leuchteinrichtung 33 Licht erzeugen. Die Leuchtmittel erzeugen Lichtstrahlen, die nach oben gerichtet sind, so dass sie aus dem Inneren der Ladeplattform 12 durch den jeweiligen Ausschnitt 29 bei hochgeklappter Anlaufklappe 26 austreten. Dieser Lichtaustritt erfolgt etwa in der Mitte des Ausschnitts 29 neben der hochgeklappten Anlaufklappe 26. Bei den Lichtstrahlen kann es sich um parallele Lichtstrahlen, aber auch Lichtkegel handeln, deren Durchmesser mit größerem Abstand vom Lichtleitkörper 35 zunimmt. Eine vorzugsweise rechte Längsmittelachse 36 des Lichtbündels oder des Lichtkegels ist in den Fig. 4 bis 7 punkt-strich-liniert dargestellt.

Bei den Leuchtmitteln der Leuchteinrichtung 33 kann es sich um konventionelle Glühbirnen handeln. Bevorzugt ist es aber vorgesehen, jedes Leuchtmittel bei jeweils Gruppen von Leuchtmitteln aus Leuchtdioden (LED's) zu bilden. Bei der leuchtstreifenartig ausgebildeten Leuchteinrichtung 33 sind alle LED's elektrisch verdrahtet im Lichtleitkörper 35 eingebettet, insbesondere eingegossen.

Der in den Fig. 4 bis 7 gezeigte Lichtleitkörper 35 verfügt über einen rechteckigen Querschnitt mit einer ebenen bzw. geraden, oberen Lichtaustrittsfläche 37.

Die Leuchteinrichtung 33 ist solchermaßen in der Hohlkammer 34 der Ladeplattform 12 angeordnet, dass sie bei in die Ruhestellung heruntergeklappter Anlaufklappe 26 mit Abstand unter der Anlaufklappe liegt, ohne diese zu berühren und von der heruntergeschwenkten Anlaufklappe 26 abgedeckt ist. Dabei verläuft die Längsmittelachse 36 des von den einzelnen Leuchtmitteln der Leuchteinrichtung 33, insbesondere des Lichtleitkörpers 35, erzeugten Lichtbündels bzw. Lichtkegels senkrecht zur Nutzfläche 14 oder (wie in den gezeigten Ausführungsbeispielen) etwas zur Flächennormalen der Nutzfläche 14 geneigt.

Befestigt ist die der jeweiligen Abrollsicherung 23 bzw. ihrer Anlaufklappe 36 zugeordnete Leuchteinrichtung 33, insbesondere der Lichtleitkörper 35, im Ausführungsbeispiel der Fig. 4 und 5 auf einer Innenseite der Bodenwandung 16 der Ladeplattform 12. Beispielsweise kann der Lichtleitkörper 35 mit der Innenseite der Bodenwandung 16 verklebt sein.

Im Bereich der Abrollsicherungen 23 und der dafür vorgesehenen Ausschnitte 29 in der Deckwandung 15 der Ladeplattform 12 ist eine Abdeckung 38 der jeweiligen Leuchteinrichtung 33 vorgesehen. Die Abdeckung 38 ist innerhalb der Hohlkammer 34 der Ladeplattform 12 im Bereich der jeweiligen Abrollsicherung 23 vorgesehen. Dazu ist die Abdeckung 38 so bemessen, dass sie unter der jeweils in die Ruhestellung heruntergeschwenkten Anlaufklappe 26 in der Hohlkammer 34 Platz findet. Dabei überdeckt die Abdeckung 38 die ebenfalls in der jeweiligen Hohlkammer 34 angeordnete Leuchteinrichtung 33 und/oder den Lichtleitkörper 35 derselben. Damit das von der Leuchteinrichtung 33 erzeugte Licht durch den jeweiligen Ausschnitt 29 bei geöffneter Anlaufklappe 26 nach oben austreten kann, ist die Abdeckung 38 aus einem lichtdurchlässigen Material, insbesondere Kunststoff, gebildet. Die Abdeckung 38 kann transparent oder teiltransparent ausgebildet sein. Im letztgenannten Fall dient die Abdeckung 38 als Streuscheibe, die das Licht von den beabstandeten Leuchtmitteln der Leuchteinrichtung 33 und/oder des Lichtleitkörpers 35 unter der Abdeckung 38 homogen über die Lichtaustrittsfläche der Abdeckung 38 verteilt.

Die sich mindestens über die Länge der jeweiligen Anlaufklappe 26 durchgehend erstreckende längliche Abdeckung 38 ist mit einem U-förmigen Querschnitt versehen, dessen offene Seite nach unten zum darunterliegenden Lichtleitkörper 35 der Leuchteinrichtung 33 offen ist.

Der nach oben zur Deckwandung 15 weisenden Innenseite der Bodenwandung 16 sind zwei parallele, streifenförmige Rasthaken 39 zugeordnet. Die bevorzugt über die ganze Länge der jeweiligen Anlaufklappe 26 durchgehend verlaufenden länglichen, leistenartigen Rasthaken 39 sind gegenüberliegenden Seiten des Lichtleitkörpers 35 der Leuchteinrichtung 33 zugeordnet, so dass sie eine nach oben offene Aufnahmemulde für den jeweiligen Lichtkörper 35 oder einen unteren Teil derselben in der Hohlkammer 34 im Inneren der Ladeplattform 12 bilden. Mit den Rasthaken 39 an der Innenseite der Bodenwandung 16 der Ladeplattform 12 korrespondieren an den unteren freien Rändern paralleler aufrechter Schenkel der Abdeckung 38 abgewinkelt angeordnete leistenartige Vorsprünge 40. Jeder Vorsprung 40 greift in einen Rasthaken 39 zur lösbaren Verbindung der Abdeckung 38 mit den Rasthaken 39 an der Innenseite der Bodenwandung 16 der Ladeplattform 12 ein. Dadurch ist die jeweilige Abdeckung 38 lösbar in der Hohlkammer 34 mit der Innenseite der Deckwandung 15 verbindbar, so dass die Abdeckung 38 von oben den Lichtleitkörper 35 der jeweiligen Leuchteinrichtung 33 überdeckt und bei in der Gebrauchsstellung hochgeklappter Anlaufklappe 26 der Abrollsicherung 23 die darunterliegende Leuchteinrichtung 33 schützend abdeckt bzw. überdeckt.

Es ist alternativ denkbar, in dem Ausführungsbeispiel der Fig. 4 und 5 auf die Abdeckung 38 zu verzichten, wenn die Leuchteinrichtung 33 über den Lichtkörper 35 verfügt, der die darin eingebetteten, insbesondere eingegossenen, Leuchtmittel der Leuchteinrichtung 33 auch schon schützend umgibt.

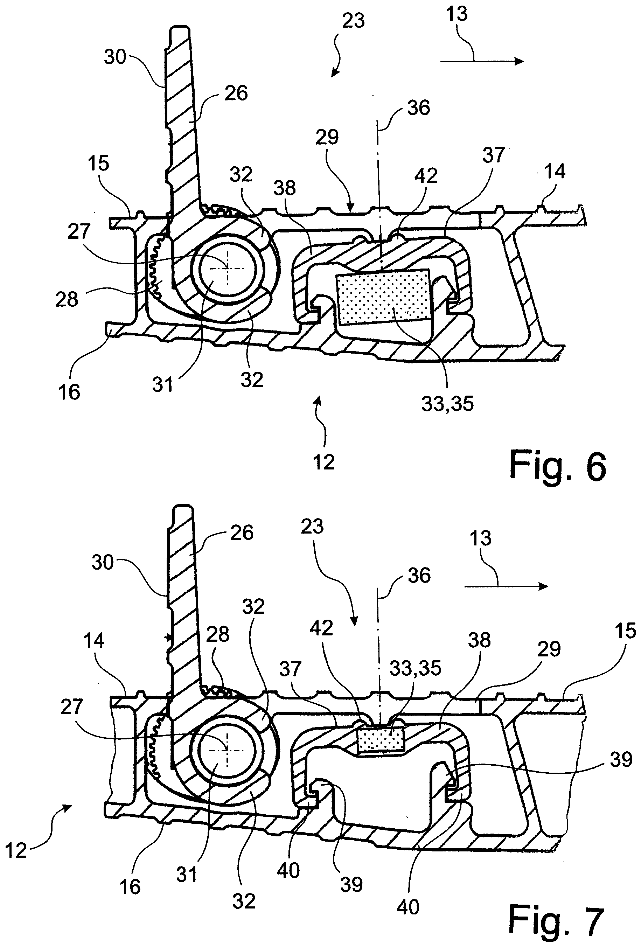

Die Fig. 6 zeigt ein Ausführungsbeispiel der beleuchtbaren Abrollsicherungen 23, das sich vom zuvor beschriebenen Ausführungsbeispiel, insbesondere der Fig. 4 und 5, nur dadurch unterscheidet, dass der Lichtleitkörper 35 der Leuchteinrichtung 33 nicht auf der Innenseite der Bodenwandung 16 der Ladeplattform 12 ruht und/oder damit verbunden ist, sondern mit der Abdeckung 38 durch beispielsweise Kleben verbunden ist. Dann befindet sich der Lichtleitkörper 35 direkt unter der Lichtaustrittsfläche 37 der Abdeckung 38, die bei in die Gebrauchsstellung heruntergeklappter Anlaufklappe 26 sich unter derselben in der Hohlkammer 34 der Ladeplattform 12 befindet.

Die Fig. 7 zeigt ein weiteres Ausführungsbeispiel, das sich von den zuvor beschriebenen Ausführungsbeispielen nur dadurch unterscheidet, dass die Leuchteinrichtung 33, insbesondere ihr Lichtleitkörper 35, unter der Lichtaustrittsfläche 37 der Abdeckung 38 vollständig oder zumindest teilweise in der Abdeckung 38 eingebettet ist. Gegebenenfalls kann dann auf den Lichtleitkörper 35 der Leuchteinrichtung 33 verzichtet werden, so dass die Leuchtmittel der Leuchteinrichtung 33 unmittelbar in der Abdeckung 38 eingebettet sind, wobei dann die Lichtaustrittsfläche 37 der Abdeckung 38 gleichzeitig den Lichtleitkörper 35 der Leuchteinrichtung 33 bildet.

Bei den zuvor beschriebenen Ausführungsbeispielen ist die Lichtaustrittsfläche 37 der jeweiligen Abdeckung 38 größtenteils ebenflächig ausgebildet, so dass sie mit geringem Abstand unter der Unterseite der in die Gebrauchsstellung heruntergeklappten Anlaufklappe 26 liegt. Bei dem gezeigten Ausführungsbeispiel weist die ebenflächige Lichtaustrittsfläche 37 der jeweiligen Abdeckung 38 im mittleren Bereich zwei beabstandete, parallele, leistenartige Profilierungen 42 auf. Diese verfügen über einen halbkreisförmigen Querschnitt. Sie können aber auch andere Querschnitte aufweisen, zum Beispiel über dreieckförmige oder trapezförmige Querschnitte verfügen. Auch ist es denkbar, die Lichtaustrittsfläche auf andere Weise zu profilieren, vollständig ebenflächig auszubilden oder insgesamt konkav oder auch konvex auszubilden. Die Art der Ausbildung bzw. Profilierung der Lichtaustrittsfläche 37 der jeweiligen Abdeckung 38 ist so getroffen, dass ein gewünschter Lichtaustritt aus der Lichtaustrittsfläche 37 herbeiführbar ist und/oder das von der Leuchteinrichtung 33 erzeugte Licht mehr oder weniger diffus nach oben durch den über der jeweiligen Leuchteinrichtung 33 angeordneten Ausschnitt 29 in der Deckwandung 15 der Ladeplattform 12 austritt.

Die in den Fig. 1 und 2 gezeigte Hubladebühne 11 verfügt zusätzlich zur Beleuchtung ihrer Abrollsicherungen 23 über eine Beleuchtung der Plattformspitze 18. Die Ausbildung der beleuchteten Plattformspitze 18 ist in den Fig. 1 bis 3 dargestellt. Eine Leuchteinrichtung 43 ist der Plattformspitze 18 solchermaßen zugeordnet, dass sie von der hinteren Querkante 17 der Ladeplattform 12 etwas beabstandet ist.

Die Leuchteinrichtung 43 der Plattformspitze 18 ist in einer Hohlkammer 44 der als Hohlkörperprofil ausgebildeten Ladeplattform 12, insbesondere der Plattformspitze 18 derselben, geschützt untergebracht. Um Licht aus der in der Hohlkammer 44 untergebrachten Leuchteinrichtung 43 austreten zu lassen, ist die Deckwandung 15 im Bereich der Plattformspitze 18 mit Durchbrüchen 45 versehen. Gemäß dem in den Fig. 1 und 2 gezeigten Ausführungsbeispiel ist eine Reihe von schmalen, schlitzartigen Durchbrüchen 45 vorgesehen. Diese Reihe mehrere Durchbrüche 45 verläuft mit parallelem Abstand zur hinteren Querkante 17 der Ladeplattform 12. Dadurch tritt nach oben durch die Nutzfläche 14 der Ladeplattform 12 aus den Durchbrüchen 45 Licht aus, und zwar durch die Beabstandung der Reihe von Durchbrüchen 45 von der hinteren Querkante 17 derart, dass Personen auf der Nutzfläche 14 rechtzeitig vor Erreichen der hinteren Querkante 17 darauf hingewiesen werden.

Gemäß der Darstellung in den Fig. 1 und 2 liegt die Reihe nebeneinander angeordneter Durchbrüche 45 etwa zwischen der hinteren Querkante 17 und den von dieser weiter beabstandeten Abrollsicherungen 23. Bei der Darstellung der Fig. 1 und 2 weisen die in einer Reihe mit Abstand nebeneinanderliegenden Durchbrüche 45 etwa gleiche Abstände auf. Die Abstände sind etwa so groß wie die sich in Richtung parallel zur hinteren Querkante 17 erstreckenden Länge der gleich großen Durchbrüche 45. Die äußeren Durchbrüche 45 sind von den gegenüberliegenden Längsrändern 25 der Ladeplattform 12 auch etwa so weit entfernt, wie die benachbarten Durchbrüche 45 voneinander beabstandet sind. Auf diese Anordnung der benachbarten Durchbrüche 45 ist die Erfindung aber nicht beschränkt. Die Durchbrüche 45 können auch kleinere oder größere Abstände aufweisen. Außerdem können die Durchbrüche 45 auch über andere Grundflächen verfügen, beispielsweise quadratische, runde, elliptische oder symbolische Grundflächen, die beispielsweise einen Fußabdruck symbolisieren.

Allen zur Beleuchtung der Plattformspitze 18 dienenden nebeneinanderliegenden Durchbrüchen 45 ist im gezeigten Ausführungsbeispiel eine als Leuchtstreifen oder Leuchtstreifen mit Lichtleitkörper ausgebildete Leuchteinrichtung 43 zugeordnet. Diese Leuchteinrichtung 43 ist beim Ausführungsbeispiel der Fig. 1 und 2 im Prinzip so ausgebildet wie die Leuchteinrichtungen 33 zur Beleuchtung der Abrollsicherung 23.

Die in den Figuren beschriebene Hubladebühne 11 weist Leuchteinrichtungen 33 zum Beleuchten der Abrollsicherungen 23 und Leuchteinrichtungen 43 zum Beleuchten der Plattformspitze 18 auf. Die Erfindung eignet sich aber auch für Hubladebühnen 11, die nur Leuchteinrichtungen 33 zur Beleuchtung der Abrollsicherungen 23 aufweisen, aber über keine Leuchteinrichtungen 43 zur Beleuchtung der Plattformspitze 18 verfügen. Demzufolge umfasst die Erfindung Hubladebühnen 11 mit beleuchteten Abrollsicherungen 23 und beleuchtbarer Plattformspitze 18 (wie in den Figuren dargestellt) aber auch Hubladebühnen 11, bei denen nur die Abrollsicherungen 23 beleuchtbar sind.

Die Erfindung bezieht sich auch auf Hubladebühnen 11, deren Ladeplattformen 12 alternativ oder zusätzlich zu den quer zur Fahrtrichtung 13 verlaufenden Abrollsicherungen 23 längs zur Fahrtrichtung 13 verlaufende Abrollsicherungen aufweisen.

### Bezugszeichenliste:

| | | | |
|---|---|---|---|
| 10 | Fahrzeugaufbau | 43 | Leuchteinrichtung |
| 11 | Hubladebühne | 44 | Hohlkammer |
| 12 | Ladeplattform | 45 | Durchbruch |
| 13 | Fahrtrichtung | | |
| 14 | Nutzfläche | | |
| 15 | Deckwandung | | |
| 16 | Bodenwandung | | |
| 17 | hintere Querkante | | |
| 18 | Plattformspitze | | |
| 19 | Plattformträger | | |
| 20 | Hubwerk | | |
| 21 | Tragrohr | | |
| 22 | Längsträger | | |
| 23 | Abrollsicherung | | |
| 24 | Endbereich | | |
| 25 | Längsrand | | |
| 26 | Anlaufklappe | | |
| 27 | Schwenkachse | | |
| 28 | Rad | | |
| 29 | Ausschnitt | | |
| 30 | Oberseite | | |
| 31 | Stange | | |
| 32 | Klaue | | |
| 33 | Leuchteinrichtung | | |
| 34 | Hohlkammer | | |
| 35 | Lichtleitkörper | | |
| 36 | Längsmittelachse | | |
| 37 | Lichtaustrittsfläche | | |
| 38 | Abdeckung | | |
| 39 | Rasthaken | | |
| 40 | Vorsprung | | |
| 42 | Profilierung | | |

## Patentansprüche

1. Hubladebühne für ein Fahrzeug mit einer Ladeplattform (12) und einem Hubwerk (20) zum wahlweisen Heben, Senken und Verschwenken der Ladeplattform (12), wobei die Ladeplattform (12) eine quer zur Fahrtrichtung (13) des Fahrzeugs verlaufende Plattformspitze (18) und mindestens eine Abrollsicherung (23) aufweist, und dass jede Abrollsicherung (23) wenigstens eine Anlaufklappe (26) aufweist, die aus einer in der Ebene einer Nutzfläche (14) der Ladeplattform (12) liegende Ruhestellung in eine gegenüber der Nutzfläche (14) mindestens teilweise vorstehende und/oder hochstehende Gebrauchsstellung verschwenkbar ist, **dadurch gekennzeichnet, dass** die jeweilige Abrollsicherung (23) durch wenigstens eine ihr zugeordnete Leuchteinrichtung (33, 43) vom Inneren der Ladeplattform (12) aus durch mindestens einen Ausschnitt (29) in einer eine Nutzfläche (14) bildenden Deckwandung (15) der Ladeplattform (12) nach oben hindurchtretendes Licht beleuchtbar ist, wobei die wenigstens eine Leuchteinrichtung (33) der jeweiligen Abrollsicherung (23) einem Bereich ihrer wenigstens einen Anlaufklappe (26) zugeordnet ist und unter der jeweiligen sich in der Ruhestellung befindenden, heruntergeklappten Anlaufklappe (26) angeordnet und/oder von der jeweiligen in die Ruhestellung heruntergeklappten Anlaufklappe (26) überdeckbar ist.

2. Hubladebühne nach Anspruch 1, **dadurch gekennzeichnet, dass** die wenigstens eine Leuchteinrichtung (33, 43) im Inneren der Ladeplattform (12) angeordnet ist, vorzugsweise unterhalb der Nutzfläche (14) der Ladeplattform (12) angeordnet ist.

3. Hubladebühne nach Anspruch 1 oder 2, **dadurch gekennzeichnet, dass** die jeder Abrollsicherung (23) zugeordnete Leuchteinrichtung (33) in der Ladeplattform (12) unter einem Ausschnitt (29) für die jeweilige Anlaufklappe (26) in der Nutzfläche (14), insbesondere die diese bildende Deckwandung (15) der Ladeplattform (12), angeordnet ist, vorzugsweise derart, dass die jeweilige Leuchteinrichtung (33) von der ihr zugeordneten Anlaufklappe (26) in der Ruhestellung derselben überdeckt und/oder abgedeckt ist.

4. Hubladebühne nach einem der vorhergehenden Ansprüche, **dadurch gekennzeichnet, dass** der Ausschnitt (29) bei in die Gebrauchsstellung hochgeklappter Anlaufklappe (26) wenigstens teilweise freigebbar ist zum Austritt des von der mindestens einen Leuchteinrichtung (33) unter dem jeweiligen Ausschnitt (29) stammenden Lichts.

5. Hubladebühne nach einem der vorhergehenden Ansprüche, **dadurch gekennzeichnet, dass** in der Ladeplattform (12) unterhalb der sich in der heruntergeklappten Ruhestellung befindenden jeweiligen Anlaufklappe (26) eine Abdeckung (38), vorzugsweise eine mindestens teilweise lichtdurchlässige Abdeckung (38), angeordnet ist, insbesondere die jeweilige Abdeckung (38) in der Ladeplattform (12) mit derselben bevorzugt lösbar verbunden ist.

6. Hubladebühne nach einem der vorhergehenden Ansprüche, **dadurch gekennzeichnet, dass** die mindestens eine Leuchteinrichtung (33) in oder unter der jeweiligen Abdeckung (38) angeordnet ist.

7. Hubladebühne nach einem der vorhergehenden Ansprüche, **dadurch gekennzeichnet, dass** die der jeweiligen Abrollsicherung (23) zugeordnete Leuchteinrichtung (33) mindestens eine Reihe von vorzugsweise quer zur Fahrtrichtung (13) verlaufender, vorzugsweise gleicher und/oder voneinander beabstandeter, Leuchtmittel aufweist, wobei bevorzugt die Leuchtmittel als Leuchtdioden oder dergleichen ausgebildet sind.

8. Hubladebühne nach einem der vorhergehenden Ansprüche, **dadurch gekennzeichnet, dass** alle Leuchtmittel oder Leuchtdioden jeder Leuchteinrichtung (33) in einem lichtdurchlässigen Lichtleitkörper (35) der jeweiligen Leuchteinrichtung (33) eingebettet und/oder eingegossen sind.

9. Hubladebühne nach einem der vorhergehenden Ansprüche, **dadurch gekennzeichnet, dass** die Leuchteinrichtungen (33) solchermaßen in der Ladeplattform (12) angeordnet sind, dass das von ihren Leuchtmitteln und/oder ihren Lichtleitkörpern (35) abgestrahlte Licht mindestens größtenteils nach oben gerichtet aus dem jeweiligen Ausschnitt (29) im Bereich der mindestens einen Abrollsicherung (23) und/oder der jeweiligen Anlaufklappe (26) derselben austritt oder hindurchtritt und/oder durch die Nutzfläche (14) der Ladeplattform (12) nach oben gerichtetes Licht ausstrahlt.

10. Hubladebühne nach einem der vorhergehenden Ansprüche, **dadurch gekennzeichnet, dass** im Bereich der Plattformspitze (18) vorzugsweise mehrere Durchbrüche (45) in der Nutzfläche (14) der Ladeplattform (12) angeordnet sind, wobei allen Durchbrüchen (45) mindestens eine Leuchteinrichtung (43) und/oder die gleiche einzige Leuchteinrichtung (43) zugeordnet ist.

11. Hubladebühne nach Anspruch 10, **dadurch gekennzeichnet, dass** jedem Durchbruch (45) wenigstens ein Leuchtmittel der oder der jeweiligen Leuchteinrichtung (43) zugeordnet ist, insbesondere in und/oder unter dem jeweiligen Durchbruch (45) wenigstens ein Leuchtmittel der oder der jeweiligen Leuchteinrichtung (43) angeordnet ist.

## Claims

1. Tail lift for a vehicle, having a loading platform (12) and a lifting mechanism (20) for selectively lifting, lowering and pivoting the loading platform (12), wherein the loading platform (12) has a platform tip (18), which runs transversely with respect to the direction of travel (13) of the vehicle, and at least one roll-away prevention means (23), and wherein each roll-away prevention means (23) has at least one run-on flap (26) which is pivotable from a rest position that lies in the plane of a useful surface (14) of the loading platform (12) to a use position that at least partially protrudes and/or projects upwards in relation to the useful surface (14), **characterized in that** the respective roll-away prevention means (23) is illuminable by at least one lighting device (33, 43) assigned to it from inside the loading platform (12) by light that passes upwards through a cutout (29) in a top wall (15) of the loading platform (12), said top wall forming a useful surface (14), wherein the at least one lighting device (33) of the respective roll-away prevention means (23) is assigned to a region of the at least one run-on flap (26) thereof and is arranged under the respective folded-down run-on flap (26) in the rest position and/or is overlappable by the respective run-on flap (26) folded-down in the rest position.

2. Tail lift according to Claim 1, **characterized in that** the at least one lighting device (33, 43) is arranged inside the loading platform (12), preferably is arranged below the useful surface (14) of the loading platform (12) .

3. Tail lift according to Claim 1 or 2, **characterized in that** the lighting device (33) assigned to each roll-away prevention means (23) is arranged in the loading platform (12) under a cutout (29) for the respective run-on flap (26) in the useful surface (14), in particular the top wall (15) of the loading platform (12) that forms said useful surface, preferably in such a way that the respective lighting device (33) is overlapped and/or covered by the run-on flap (26) assigned to it in the rest position of same.

4. Tail lift according to one of the preceding claims, **characterized in that**, when the run-on flap (26) is folded up into the use position, the cutout (29) is at least partially openable to allow the light originating from the at least one lighting device (33) under the respective cutout (29) to exit.

5. Tail lift according to one of the preceding claims, **characterized in that** a cover (38), preferably an at least partially light-permeable cover (38), is arranged in the loading platform (12) below the respective run-on flap (26) in the folded-down rest position, in particular the respective cover (38) in the loading platform (12) is preferably releasably connected to same.

6. Tail lift according to one of the preceding claims, **characterized in that** the at least one lighting device (33) is arranged in or under the respective cover (38).

7. Tail lift according to one of the preceding claims, **characterized in that** the lighting device (33) assigned to the respective roll-away prevention means (23) has at least one row of illuminants which preferably run transversely with respect to the direction of travel (13), are preferably identical and/or are spaced apart from one another, wherein the illuminants are preferably in the form of light-emitting diodes or the like.

8. Tail lift according to one of the preceding claims, **characterized in that** all the illuminants or light-emitting diodes of each lighting device (33) are embedded and/or moulded in a light-permeable light guiding body (35) of the respective lighting device (33).

9. Tail lift according to one of the preceding claims, **characterized in that** the lighting devices (33) are arranged in the loading platform (12) in such a way that the light emitted by the illuminants thereof and/or the light guiding bodies (35) thereof at least largely exits or passes through the respective cutout (29) in the region of the at least one roll-away prevention means (23) and/or of the respective run-on flap (26) of same in an upwardly directed manner and/or upwardly directed light radiates through the useful surface (14) of the loading platform (12).

10. Tail lift according to one of the preceding claims, **characterized in that**, in the region of the platform tip (18), multiple apertures (45) are arranged in the useful surface (14) of the loading platform (12), wherein at least one lighting device (43) and/or the same single lighting device (43) is assigned to all the apertures (45) .

11. Tail lift according to Claim 10, **characterized in that** at least one illuminant of the or of the respective lighting device (43) is assigned to each aperture (45), in particular at least one illuminant of the or of the respective lighting device (43) is arranged in and/or under the respective aperture (45).

## Revendications

1. Hayon élévateur pour un véhicule, comprenant une plateforme de chargement (12) et un mécanisme de levage (20) pour sélectivement monter, descendre et pivoter la plateforme de chargement (12), dans lequel la plateforme de chargement (12) présente une tête de plateforme (18) s'étendant transversalement au sens de la marche (13) du véhicule, et au moins un dispositif d'arrêt (23), et chaque dispositif d'arrêt (23) présente au moins un rabat de butée (26) qui peut pivoter d'une position de repos située dans le plan d'une surface utile (14) de la plateforme de chargement (12) vers une position de service au moins partiellement en saillie et/ou relevée par rapport à la surface utile (14),
**caractérisé en ce que** le dispositif d'arrêt (23) respectif peut être éclairé par au moins un dispositif d'éclairage (33, 43) qui lui est associé, avec une lumière passant à partir de l'intérieur de la plateforme de chargement (12) à travers au moins une découpe (29) dans une paroi de couverture (15), formant une surface utile (14), de la plateforme de chargement (12) vers le haut, dans lequel ledit au moins un dispositif d'éclairage (33) du dispositif d'arrêt (23) respectif est associé à une zone du au moins un rabat de butée (26) de celui-ci, et est disposé sous le rabat de butée (26) respectif rabattu se trouvant dans la position de repos, et/ou peut être recouvert par le rabat de butée (26) respectif rabattu dans la position de repos.

2. Hayon élévateur selon la revendication 1, **caractérisé en ce que** ledit au moins un dispositif d'éclairage (33, 43) est disposé à l'intérieur de la plateforme de chargement (12), de préférence au-dessous de la surface utile (14) de la plateforme de chargement (12) .

3. Hayon élévateur selon la revendication 1 ou 2, **caractérisé en ce que** le dispositif d'éclairage (33) associé à chaque dispositif d'arrêt (23) est disposé dans la plateforme de chargement (12) sous une découpe (29) pour le rabat de butée (26) respectif dans la surface utile (14), en particulier la paroi de couverture (15) de la plateforme de chargement (12) formant celle-ci, de préférence de telle sorte que le dispositif d'éclairage (33) respectif est coiffé et/ou recouvert par le rabat de butée (26) qui lui est associé dans la position de repos de celui-ci.

4. Hayon élévateur selon l'une quelconque des revendications précédentes, **caractérisé en ce que**, lorsque le rabat de butée (26) est relevé dans la position de service, la découpe (29) peut être dégagée au moins partiellement pour la sortie de la lumière provenant dudit au moins un dispositif d'éclairage (33) sous la découpe (29) respective.

5. Hayon élévateur selon l'une quelconque des revendications précédentes, **caractérisé en ce que** dans la plateforme de chargement (12), au-dessous du rabat de butée (26) respectif se trouvant dans la position de repos rabattue, est disposé un recouvrement (38), de préférence un recouvrement (38) au moins partiellement transparent, en particulier **en ce que** le recouvrement (38) respectif dans la plateforme de chargement (12) est relié de manière amovible à celle-ci.

6. Hayon élévateur selon l'une quelconque des revendications précédentes, **caractérisé en ce que** ledit au moins un dispositif d'éclairage (33) est disposé dans ou sous le recouvrement (38) respectif.

7. Hayon élévateur selon l'une quelconque des revendications précédentes, **caractérisé en ce que** le dispositif d'éclairage (33) associé au dispositif d'arrêt (23) respectif présente au moins une rangée d'agents lumineux s'étendant de préférence transversalement au sens de la marche (13), de préférence identiques et/ou espacés les uns des autres, dans lequel les agents lumineux sont de préférence réalisés sous forme de diodes électroluminescentes ou similaires.

8. Hayon élévateur selon l'une quelconque des revendications précédentes, **caractérisé en ce que** tous les agents lumineux ou diodes électroluminescentes de chaque dispositif d'éclairage (33) sont incorporés et/ou moulés dans un corps conducteur de lumière transparent (35) du dispositif d'éclairage respectif (33) .

9. Hayon élévateur selon l'une quelconque des revendications précédentes, **caractérisé en ce que** les dispositifs d'éclairage (33) sont disposés dans la plateforme de chargement (12) de telle sorte que la lumière émise par les agents lumineux et/ou les corps conducteurs de lumière (35) de celle-ci sort de la découpe (29) respective ou traverse celle-ci, en étant au moins largement orientée vers le haut, au niveau dudit au moins un dispositif d'arrêt (23) et/ou du rabat de butée (26) respectif de celui-ci et/ou émet une lumière orientée vers le haut à travers la surface utile (14) de la plateforme de chargement (12).

10. Hayon élévateur selon l'une quelconque des revendications précédentes, **caractérisé en ce qu'**au niveau de la tête de plateforme (18) de préférence plusieurs passages (45) sont disposés dans la surface utile (14) de la plateforme de chargement (12), dans lequel au moins un dispositif d'éclairage (43) et/ou le même dispositif d'éclairage (43) unique est/sont associé(s) à tous les passages (45).

11. Hayon élévateur selon la revendication 10, **caractérisé en ce qu'**au moins un agent lumineux du dispositif d'éclairage (43) (respectif) est associé à chaque passage (45), en particulier au moins un agent lumineux du dispositif d'éclairage (43) (respectif) est disposé dans et/ou sous le passage (45) respectif.
